(19) Europäisches Patentamt European Patent Office Office européen des brevets

(11) **EP 2 344 798 B1**

(12) **EUROPEAN PATENT SPECIFICATION**

(45) Date of publication and mention
of the grant of the patent:
**22.10.2014 Bulletin 2014/43**

(21) Application number: **09760380.7**

(22) Date of filing: **13.11.2009**

(51) Int Cl.:
***F16L 11/08*** *(2006.01)*

(86) International application number:
**PCT/US2009/064347**

(87) International publication number:
**WO 2010/056965 (20.05.2010 Gazette 2010/20)**

(54) **A FIBER-REINFORCED THERMOPLASTIC PIPE**

ROHR AUS FASERVERSTÄRKTEM THERMOPLAST

TUYAU EN MATIÈRE THERMOPLASTIQUE RENFORCÉ PAR DES FIBRES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **13.11.2008 CN 200810176723**

(43) Date of publication of application:
**20.07.2011 Bulletin 2011/29**

(73) Proprietor: **E. I. du Pont de Nemours and Company
Wilmington, DE 19898 (US)**

(72) Inventors:
• **LI, Xuedong
  Shanghai (CN)**

• **CHANG, Clifford C.
  Shanghai (CN)**

(74) Representative: **Heinemann, Monica et al
Abitz & Partner
Patentanwälte
Postfach 86 01 09
81628 München (DE)**

(56) References cited:
**EP-A1- 1 285 737          US-A- 3 930 091
US-A1- 2004 176 007     US-B1- 6 179 008**

**Description**

## BACKGROUND OF THE INVENTION

### 1. Field of the Invention

The present invention relates to a fiber-reinforced thermoplastic pipe, which is of high burst pressure, and is particularly suitable to serve as an oil or gas or water transmission pipeline.

### 2. Description of the Related Art

Steel pipes are used extensively in the industry of fluid delivery, particularly the transmission of crude oil and gas, because steel pipes enjoy high strength. The disadvantages of the steel pipes are that they are heavy and not corrosion resistant, thus greatly affecting the cost of their installation and service life.

Thermoplastic pipes such as those disclosed in US 6 179 008 B1 are used in place of steel pipes in some uses. A reinforced thermoplastic pipe is much lighter than a steel pipe, and has the advantages that it is wrappable, easy to ship, and easy to install, and has therefore won more and more attention. A common thermoplastic pipe usually is comprised of an inner tube, an outer tube, and a reinforcing layer, while the said reinforcing layer usually is comprised of fiber.

Structurally a thermoplastic pipe usually is comprised of an inner tube layer, a reinforcing fiber covering the inner tube layer, and an outermost outer tube layer. The usual processing method is one wherein the inner tube layer is first extruded, then the reinforcing fiber is wrapped over the inner tube layer through a certain processing method, and finally the outer tube is extruded to cover the reinforcing fiber layer.

For example, disclosed in the US patent application with the application number 2008/0006338 is a wrappable pipe, which is comprised of an inner pressure barrier layer formed along the vertical axis, at least one reinforcing layer (the reinforcing layer is comprised of fiber and solid hydrocarbon substrate) placed over the internal pressure barrier layer and at least one external layer coated over the at least one reinforcing layer. To make it, the essentially solid substrate composite is applied at a temperature of 20-40°C to a fiber bundle, and after it is dried, a fiber tape with the substrate composite between the fibers is formed. Immediately after that, the fiber tape is wound over the inner layer of the pipe, before forming an external layer over the fiber tape.

The US patent with the application number 2003/0181111 relates to a reinforcing fabric for making a polymer substrate hose; the reinforcing fabric is comprised of many essentially parallel reinforcing strands that are arranged vertically along the fabric and many strands that converge vertically of horizontally with the reinforcing strands.

Knitting is a common process to place the reinforcing fiber over the inner tube. This process has the advantage that the processing speed is extraordinarily fast, but fibers will criss-cross up and down among themselves to form horizontal pressure among fibers, particularly when fibers of a high module are used; there will be a great loss in the strength of the fiber due to this horizontal action, and the strength utilization is not high. Wrapping using woven fabrics is also a utilized process, but it, too, has strength loss between fibers.

The fiber wrapping process is a process of both fast processing and high strength utilization rate. However, the wrapping process often causes overlapped portions or gaps among fibers, and it is somewhat difficult to control. Another common process that is fast in processing and does not cause criss-crossing up and down among fibers is use of unidirectional tapes or unidirectional fabric. For example, a number of pieces of parallel fibers and polyethylene resin are co-extruded to form a unidirectional reinforcing tape. The fiber is fixed in the resin. This reinforcing tape is fast to wrap, good in stiffness, easy to control, and not liable to cause overlapped portions or form gaps among fibers. However, due to the limitation of the technology of co-extrusion and the effect of the space polyethylene resin occupies, the amount of the fiber which can be used is restricted, and it is not capable of producing very dense tapes, nor of satisfying the requirement for making plastic pipes of very high pressure strength. Besides, the technology of co-extrusion requires special equipment and has a very high requirement for the quality of the fiber, thus restricting its application to a certain extent.

Therefore, a need exists to provide a thermoplastic reinforced pipe of even higher strength to overcome the disadvantages mentioned above (including the fiber packing density, the stiffness of the tape and controllability), and a process to make this thermoplastic reinforced pipe is also needed.

### Summary of the Invention

An invention purpose of the present invention is to provide a high strength thermoplastic reinforced pipe.

Another purpose of the present invention is to provide a process to make the thermoplastic reinforced pipe.

Therefore, one aspect of the present invention is to provide a thermoplastic reinforced pipe as defined in claim 1.

Another aspect of the present invention relates to a process to make the thermoplastic reinforced pipe which is defined in claim 9. Additional features of the invention are disclosed in the dependent claims.

**Brief Description of the Drawings**

Figure 1 is a schematic diagram of a lateral cross section of the thermoplastic reinforced pipe of the present invention.
Figure 2 is a schematic diagram of a cross section of the reinforcing fabric of the existing technology.
Figure 3 is a schematic diagram of a perspective view of a thermoplastic polymer pipe with reinforcing fabric.
Figure 4 is a schematic diagram of a longitudinal cross section of the thermoplastic reinforced pipe with the reinforcing fabric of Figure 2.
Figure 5 is a schematic diagram of the arrangement of the reinforcing fiber of the reinforcing fabric.
Figures 6A and 6B are schematic diagrams illustrating the placement of the reinforcing fabric onto the polymer inner tube.
Figure 7 is a schematic diagram of a longitudinal cress section of the thermoplastic reinforced pipe with the reinforcing fabric of the present invention.

**Detailed Description of the Preferred Embodiment**

The thermoplastic reinforced pipe of the present invention comprise a thermoplastic polymer inner tube and a thermoplastic polymer outer tube. There is no special restriction to any thermoplastic materials applicable to the constitution of the polymer inner tube and outer tube, and it depends on the specific use of the thermoplastic reinforced pipe. Appropriate thermoplastic polymer materials include, for example, thermoplastic polyolefins such as polyethylene (including high density polyethylene, moderate density polyethylene, and low density polyethylene), polyvinyl chloride, polypropylene, polyamide, and polyvinylidene fluoride.

Thermoplastic polymer materials constituting the polymer inner tube and outer tube can be the same or different, depending on the specific use. In one example of the present invention, high density polyethylene is used for the thermoplastic polymer inner tube and outer tube. In another example of the present invention, nylon is used for the inner tube, while high density polyethylene is used for the outer tube. In yet another example of the present invention, high density polyethylene coated with fluoro polymer in the inner surface is used for the inner tube, while high density polyethylene is used for the outer tube.

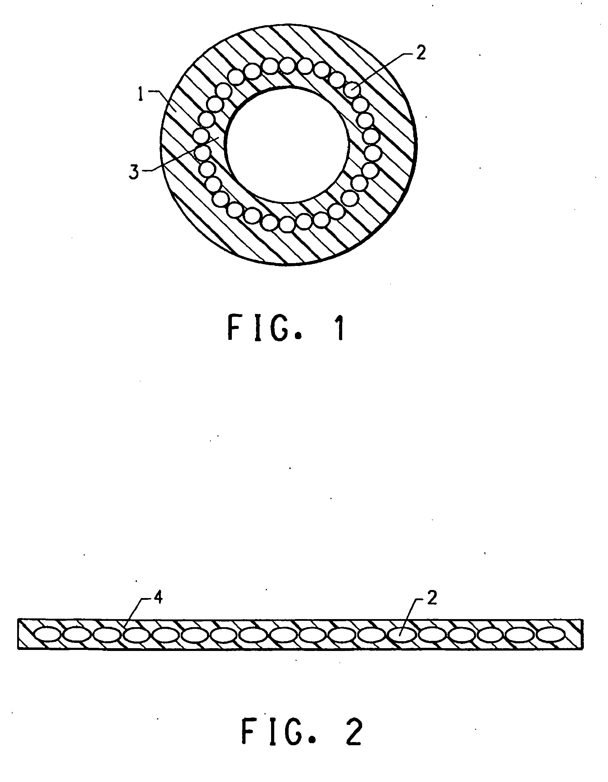

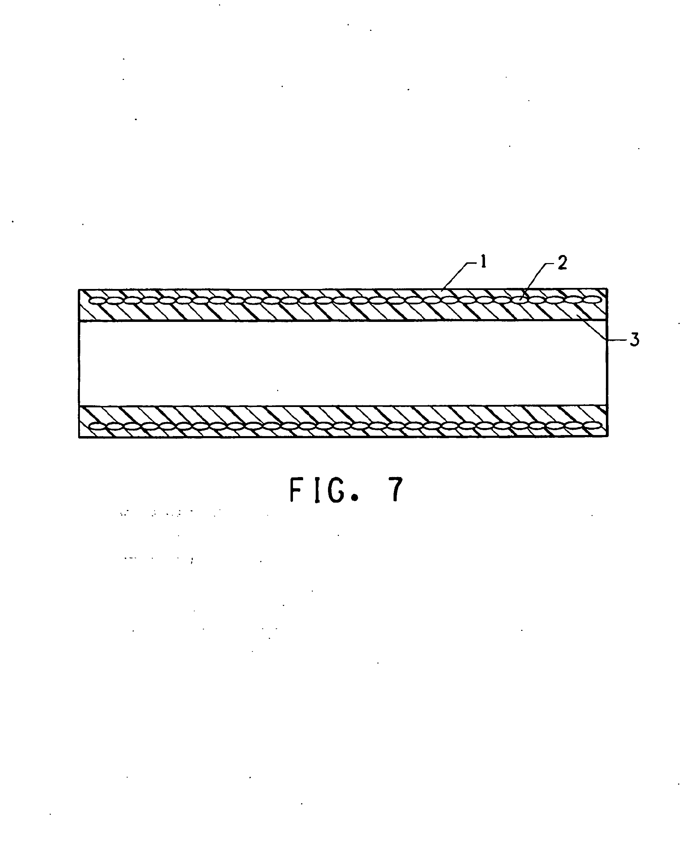

The thermoplastic reinforced pipe of the present invention also comprise a reinforcing fabric between the thermoplastic polymer inner and outer tubes. Figure 1 is a schematic diagram of a cross section of the thermoplastic reinforced pipe in an example of the present invention. As is shown in the Figure, the thermoplastic reinforced pipe of the present invention comprises the thermoplastic polymer inner tube 3, the reinforcing fabric 2 and the thermoplastic polymer outer tube 1. Figure 7 is a longitudinal cross section of the thermoplastic reinforced pipe in Figure 1, and according to Figure 7, the reinforcing fabric 2 of the present invention is encapsulated between the polymer inner tube 3 and the polymer outer tube 1.

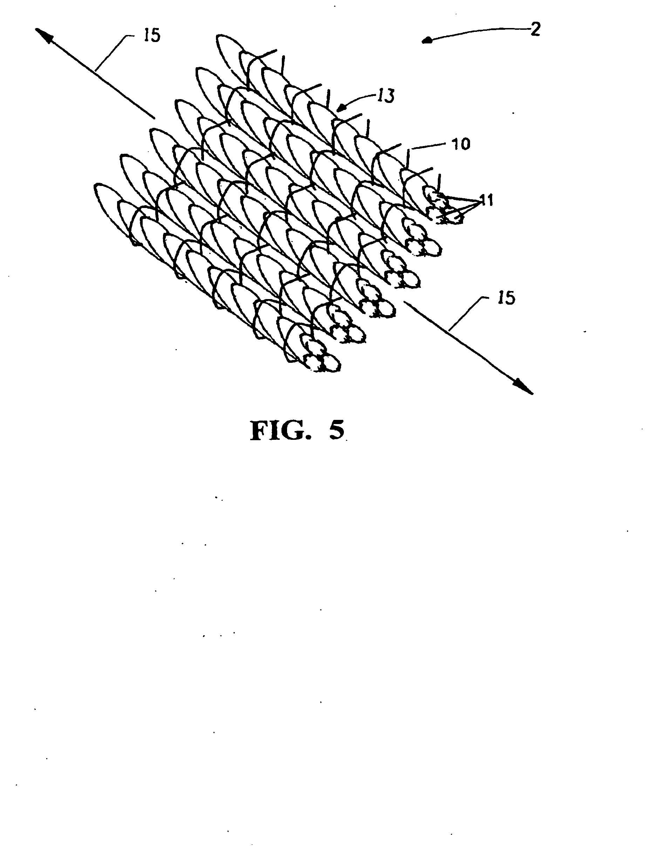

Figure 5 is a schematic diagram of the arrangement of the reinforcing fiber of the reinforcing fabric 2 of the present invention. According to Figure 5, the reinforcing fiber in the reinforcing fabric 2 of the present invention comprise the warp yarns 11 and thermoplastic polymer weft yarns 10.

In the present invention, referring to Figure 5, the term "warp yams" refers to the twisted yarns 11 arranged in the longitudinal direction 15 of the reinforcing fabric 2. In an example of the present invention, the twisted yarns 11 and twisted cords 13 are made as shown below: The fibers in each yarn 11 is twisted until the yarn's twist factor is 0.1 to 6.5, to obtain the twisted yarn 11; and then a group or ply of 2-20 twisted yarns is twisted backward (in the opposite direction of the twist in the yarns 11) until the group twist factor is 0.1 to 6.5, to obtain the twisted cord 13. See the following formula for calculation of the twist factor,

$$\text{Twist factor} = \frac{\text{Number of twist per meter} \times \sqrt{\dfrac{\text{Total number of deniers of the fiber or cord}}{\text{Fiber density}}}}{2395}$$

In the present invention, the term "weft yarns" refer to yarns or strands made of filaments of thermoplastic polymer extending in a direction perpendicular to the longitudinal direction 15 of the reinforcing fabric 2; after weaving, weft yarns 10, two yarns or strands per group, through stranding, fix and position the warp yarn 11, as shown in Figure 5. In the present invention, the warp yarns 11 are thermo set, thus avoiding the phenomenon of overlapping and gaps in the tapes in the process of wrapping, as a result of the distortion inside and outside the surface which is often found in unidirectional fabrics in the existing technology because the weft yarn 10 is relatively soft.

In the present invention, other than the thermo set weft yarns 10 binding the warp cords 13 together, the reinforcing fabric 2 preferably does not contain any other material binding the warp yarns 11 or cords 13 together. In other words, preferably the warp yarns 11 or cords 13 are held together solely by the thermoset weft yarns 10. The reinforcing fabric 2 preferably does not contain (or is without) a binder or matrix resin or adhesive binding the warp yarns together like typical unidirectional assemblies commercially available from Honeywell Corporation under the tradename SpectraShield®.

There is no special restriction to equipment applicable to weaving the reinforcing fabric 2 of the present invention. In an example of the present invention, the reinforcing fabric 2 of the present invention is woven using the weaving equipment purchased from Dornier Company. There is no special restriction to the width of the woven reinforcing fabric 2 described, and it can be any appropriate width. In another example of the present invention, the width of the woven reinforcing fabric 2 is 95-190 mm, and the density of the warp yarns 11 in the lateral direction (perpendicular to the longitudinal direction 15 of the fabric 2) is 6-10 filaments/10 mm, preferably 7-9 filaments/10 mm, and more preferably around 8 filaments/10 mm.

There is no special restriction to yarns (or fiber) applicable to making the warp yarns 11, as it can be any polymer material, or a non-polymer material. Therefore, the term "yams (or fiber) for making warp yams" in the present invention has an extensive connotation, as it not only includes yarns made of a polymer, but also yarns made of non-polymers (such as carbon fiber, glass fiber, metal fiber, etc.).

Materials for making yarns described may be selected from, for example, an aramid fiber (such as Kevlar® fiber purchased from E. I. du Pont de Nemours and Company ("DuPont") of the United States, Twaron® fiber and Technora® fiber from Teijin Company, or Heracron® fiber from Kolon Company, polyester fiber (such as polyethylene terephthalate fiber), carbon fiber, glass fiber, metal fiber, etc.; it is preferably an aramid fiber, and more preferably Kevlar® fiber.

The single multifilament yarn 11 for making the twisted cord 13 preferably has a linear density of 500 to 9000 denier, more preferably 1000 to 4500 denier, even more preferably 2800 to 3200 denier, and most preferably around 3000 denier.

There is no special restriction to the thermoplastic polymer fiber that is used in the weft yarn 10, as it can be any appropriate thermoplastic thermosettable polymer fiber. Non-restrictive examples of the thermoplastic polymer of the weft yarn 10 include: for example, thermoplastic polyamide, polyester, polyolefin, etc. Applicable examples of thermoplastic polyamide include for example, nylon 6 or nylon 66 fibers, etc., purchased from InterKordsa; and applicable examples of polyesters include for example, polyethylene terephthalate, etc.; and applicable examples of polyolefins include, for example, polyethylene, polypropylene, etc.

The weft yarns 10 preferably have a linear density of 200 to 800 denier, more preferably 300 to 700 denier, and even more preferably 400 to 600 denier. After weaving, the density of the weft yarns 10 in the warp direction is 2-10 groups of yarns/10 mm, preferably 3-8 groups or yarns/10 mm, and more preferably 4-7 groups or yours/10 mm, where there are two yarns in each group and the two weft yarns 10 in each group fix the warp cords 13 through stranding. In the present invention, the term "two weft yarns 10 per group fix the warp cord 13 through stranding" refers to the fact that two weft yarns 10 are woven backward to fix the warp cords 13 through wrapping, as shown in Figure 5.

As the step of thermosetting to be mentioned later, the melting point for the polymer material used for the weft yarns 10 is lower than the melting point for the material used for the warp yarn 11 by at least 10°C, preferably by at least at least 15°C, even more preferably by at least 20°C, and most preferably by at least 25°C.

The reinforcing fabric 2 of the present invention obtained through weaving is also thermo set. The purpose of thermosetting is fusion or semi-fusion of the weft yarns 10, so that after cooling the warp yarns 11 are fixed and positioned. There is no special restriction to processes applicable to thermosetting, so far as it is capable of fusion or semi-fusion of the weft yarns 10 without affecting the strength of the warp yarns 11. In an example of the present invention, the reinforcing fabric 2 obtained through weaving is gripped and heated in two heater plates, for fusion of the weft yarns 10 for thermosetting.

Appropriate thermosetting temperature depends on the specific weft material. In an example of the present invention, polyethylene fiber is used for the weft yarns 10, and its thermosetting temperature is at least 130°C or so.

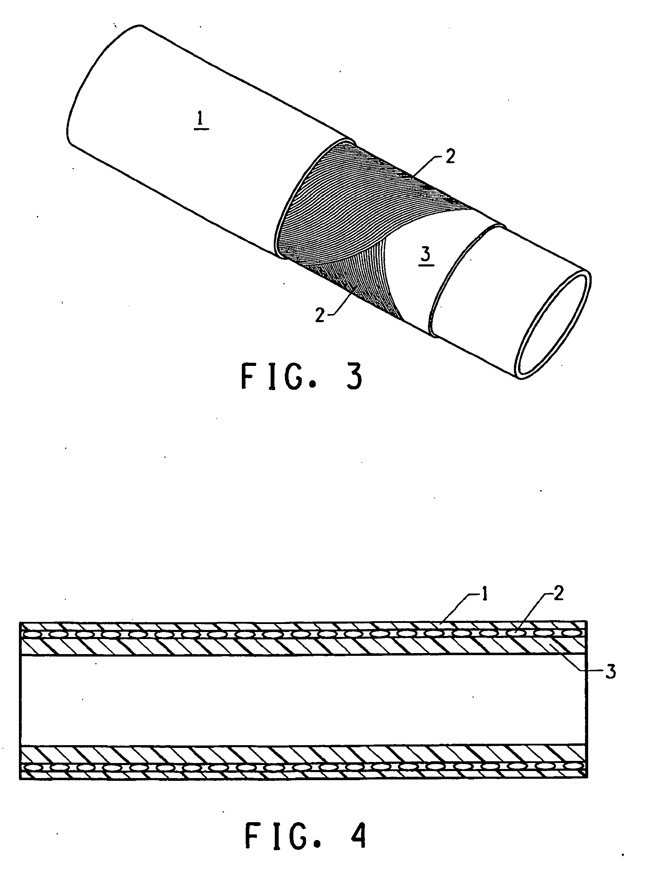

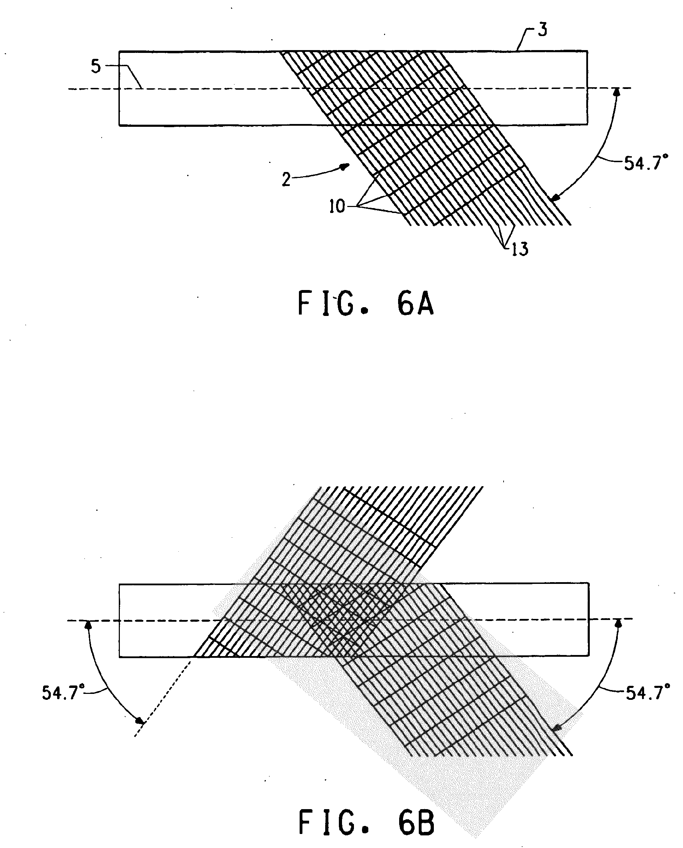

The reinforcing fabric 2 in the polymer reinforced pipe of the present invention is wrapped over the inner tube 3 at an included angle of 50-60° with respect to a longitudinal axis 5 of the inner tuber 3, and preferably in an included angle of 52-58°. Figures 6A and 6B show a process in an example of the present invention to wrap the reinforcing fabric 2 onto the inner polymer tube 3. Figure 3 is a schematic diagram of a perspective view of a thermoplastic polymer pipe wrapped with the reinforcing fabric 2. Judged by the drawing, the reinforcing fabric 2 is wrapped onto the polymer inner tube 3 in an included angle of 50-60° and the polymer outer tube 1 covers the polymer inner tube 3 wrapped with the said reinforcing fabric 2.

What is used in the present invention is a unidirectional reinforcing fabric 2. The term "unidirectional reinforcing fabric" in the present invention refers to a reinforcing fabric formed by a plurality of twisted reinforcing cords 13 which are arranged substantially parallel to each other only in the longitudinal or warp direction 15 of the reinforcing fabric 2.

The unidirectional reinforcing fabric 2 of the present invention is one wherein the twisted warp cords 13 can be packed closely based on the need, thus greatly enhancing the reinforcing effect.

Because the weft yarn 10 of the unidirectional fabric 2 of the present invention is made of a plurality of thermosettable thermoplastic fibers, therefore the hardening effect can be generated using thermosetting to fix the warp yarns 11, so that the fabric 2 is stiff and easy to control. Another aspect of the present invention relates to a process to make the thermoplastic reinforced pipe described, and it includes the following steps:

a) providing the thermoplastic polymer inner tube;

b) twisting the fiber for making the warp yarn until its twist factor is 0.1 to 6.5, to obtain the twisted fiber; and to twist the ply of 2-20 strands of the said twisted fiber backward until the twist factor is 0.1 to 6.5, to obtain the twisted cord;

c) weaving on a loom the said twisted cord with the twisted cord as warp yarn and the single strand of the thermoplastic thermosettable polymer fiber as weft yarn to obtain unidirectional reinforcing fabric, and to thermally set the weft yarns to obtain a reinforcing fabric,

d) wrapping the reinforcing fabric onto the inner tube at an included angle of 50-60°, and

e) coating the polymer outer tube onto the reinforcing fabric through an outer tube extruder.

The following is a further description of the present invention in association with examples.

## Example

The burst pressure test of the reinforced pipe is conducted on a standard burst pressuring tester in accordance with ASTM D1599-99 (2005).

## Comparative Example 1

Kevlar® 3000 denier fiber (purchased from DuPont of the United States) is twisted in the Z direction at 80 twists per meter, then three strands of the said twisted fiber are stranded again and twisted in the S direction at 50 twists per meter. The properly twisted cord is marked as Kevlar® 3000x1 x3.

90 cords of Kevlar® 3000x1x3, side by side through the 90 eyelets on the cavity die of a screw extruder (a single screw plastic pipe extruder purchased from Crown Mechanical Company of Germany) are co-extruded with polyethylene resin and combined. A fiber resin composite tape 190 mm thick and 1.5 mm wide as shown in Figure 2 is formed. Due to the restriction of the eyelets on the cavity die, it is impossible to have a compact packing between fibers, and the space in between is to be filled with polyethylene resin.

The fiber resin composite tape extruded is wound into a disc. The high density polyethylene inner tube (the inner tube diameter is 101 mm, and the inner tube wall thickness is 5 mm) is extruded on an inner tube extruder (a single screw plastic pipe extruder purchased from Crown Mechanical Company of Germany). After cooling, the fiber resin composite tape is wrapped onto the said inner tube. The first layer is wrapped clockwise, and the included angle between the tape and the direction of the length of the tube is 54.7 degrees. The second layer is wrapped in the reverse direction, and the included angle is still 54.7 degrees. The properly wrapped tube is then coated onto the high density polyethylene outer layer tube (the outer tube wall thickness is 4 mm) through the outer tube extruder (a single screw plastic pipe extruder purchased from Crown Mechanical Company of Germany), forming a thermoplastic reinforced pipe as shown in Figure 3.

The schematic diagram of the sectional profile of the said thermoplastic reinforced pipe in the direction of the length is as shown in Figure 4. The burst pressure of the reinforced pipe obtained using the process mentioned above is tested, and the result is 15MPa.

## Comparative Example 2

Kevlar® 3000 denier fiber (purchased from Du Pont of the United States) is twisted in the Z direction at 80 twists per meter, then three strands of the said twisted fiber are stranded again and twisted in the S direction at 50 twists per meter. The properly twisted cord is marked as Kevlar® 3000x1x3. Then the tape is woven with the said cord on a weaving machine; the tape is 190 mm in width, warp-wise there are 158 Kevlar® 3000x1x3 twisted cords, while weft-wise there is 600 denier polyester fiber 5 filaments/10 mm in density. The schematic diagram of the unidirectional tape made is as shown in Figure 5, wherein Kevlar® 3000x1 x3 warp-wise cord is fixed and positioned by the stranded weft-wise fiber 10.

The high density polyethylene inner tube (the inner tube diameter is 101 mm, and the inner tube wall thickness is 5 mm) is extruded on an inner tube extruder (a single screw plastic pipe extruder purchased from Crown Mechanical Company of Germany). After cooling, the properly woven unidirectional tape is wrapped onto the said inner tube. The first layer is wrapped clockwise, and the included angle between the tape and the direction of the length of the tube is 54.7 degree. The second layer is wrapped in the reverse direction, and the included angle is still 54.7 degree. The properly wrapped tube is then coated onto the high density polyethylene outer layer tube (the outer tube wall thickness is 4 mm) through the outer tube extruder (a single screw plastic pipe extruder purchased from Crown Mechanical Company of Germany).

Because the weft-wise polyester fiber is relatively soft the stiffness of the unidirectional tape is not as good, it is not easy to control in the process of wrapping, and there are some tiny gaps in some binding sites. The burst pressure of the said thermoplastic reinforced pipe using the process mentioned above is tested, and the result is 22MPa.

## Example 1

Kevlar® 3000 denier fiber (purchased from DuPont of the United States) is twisted in the Z direction at 80 twists per meter, then three strands of the said twisted fiber are stranded again and twisted in the S direction at 50 twists per meter. The properly twisted cord is marked as Kevlar® 3000x1x3. Then the tape is woven with the said cord on a weaving machine, and the tape is 190 mm in width, warp-wise there are 158 Kevlar® 3000x1 x3 twisted cords, while weft-wise there is 600 denier polyester fiber 5 filaments/10 mm in density. The schematic diagram of the unidirectional tape made is as shown in Figure 5.

The unidirectional reinforcing tape obtained goes between two heater plates at 130°C or so to set the weft-wise polyethylene fiber, and the unidirectional reinforcing tape set is coiled to become a plate to be used.

The high density polyethylene inner tube (the inner tube diameter is 101 mm, and the inner tube wall thickness is 5 mm) is extruded at 150°C on an inner tube extruder (a single screw plastic pipe extruder purchased from Crown Mechanical Company of Germany). After cooling, the properly woven unidirectional tape is wrapped onto the said inner tube as shown in Figure 6. The first layer is wrapped clockwise, and the included angle between the tape and the direction of the length of the tube is 54.7 degrees. The second layer is wrapped in the reverse direction, and the included angle is still 54.7 degrees. The properly wrapped tube is then coated at 150°C onto the high density polyethylene outer layer tube (the outer tube wall thickness is 4 mm) through the outer tube extruder (a single screw plastic pipe extruder purchased from Crown Mechanical Company of Germany). A schematic diagram of the profile of the thermoplastic reinforced pipe obtained is as shown in Figure 7. According to Figure 7, the warp-wise cords 2 in the reinforcing tape made of the Kevlar® 3000x1x3 warp-wise cords are closely packed in between the polyethylene inner tube 3 and the polyethylene outer tube 1.

Because the woven tape of the fiber tape of the thermoplastic reinforced pipe made using the process mentioned above is not subject to restriction of the space, the density of warp yarns per unit width is much higher than the extruded composite tape in Example 1. Besides, compared with the unidirectional reinforcing tape made in Comparative Example 2, the step of thermosetting weft yarns is used in the unidirectional reinforcing tape made using the process mentioned above, and as a result, the said unidirectional reinforcing tape has better stiffness, is easier to control during wrapping, and the fit between tapes is better.

The burst pressure of the thermoplastic reinforced pipe is tested using the process mentioned above, and the result is that it is 26 MPa.

## Example 2

Kevlar® 3000 denier fiber (purchased from Du Pont of the United States) is twisted in the Z direction at 80 twists per meter, and the twist factor is 1.5. Then three strands of the said twisted fiber are stranded again and twisted in the S direction at 50 twists per meter, and the twist factor is the S direction is 1.65. The properly twisted cord is marked as Kevlar® 3000x1 x3. Then the tape is woven with the said cord on a weaving machine, and the tape is 95 mm in width, warp-wise there are 79 Kevlar® 3000x1 x3 twisted cords, while weft-wise there is 600 denier polyester fiber 5 filaments/10 mm in density. The schematic diagram of the unidirectional tape made is as shown in Figure 5.

The unidirectional reinforcing tape obtained goes between two heater plates at 130°C or so to set the weft-wise polyethylene fiber, and the unidirectional reinforcing tape set is coiled to become a plate to be used.

The high density polyethylene inner tube (the inner tube diameter is 101 mm, and the inner tube wall thickness is 5 mm) is extruded at 150°C on an inner tube extruder (a single screw plastic pipe extruder purchased from Crown Mechanical Company of Germany). After cooling, the properly woven unidirectional tape is wrapped onto the said inner tube as shown in Figure 6. The first layer is wrapped clockwise, and the included angle between the tape and the direction of the length of the tube is 54.7 degrees. The second layer is wrapped in the reverse direction, and the included angle is still 54.7 degrees. The properly wrapped tube is then coated at 150°C onto the high density polyethylene outer layer tube (the outer tube wall thickness is 4 mm) through the outer tube extruder (a single screw plastic pipe extruder purchased from Crown Mechanical Company of Germany). A schematic diagram of the profile of the thermoplastic reinforced pipe obtained is as shown in Figure 7. Judged by Figure 7, the warp-wise cords 2 in the reinforcing tape made of the Kevlar® 3000x1x3 warp-wise cords are closely packed in between the polyethylene inner tube 3 and the polyethylene outer tube 1.

Because the woven tape of the fiber tape of the thermoplastic reinforced pipe made using the process mentioned above is not subject to restriction of the space, the density of warp yarns per unit width is much higher than the extruded composite tape in Example 1. Besides, compared with the unidirectional reinforcing tape made in Comparative Example 2, the step of thermosetting weft yarns is used in the unidirectional reinforcing tape made using the process mentioned above, and as a result, the said unidirectional reinforcing tape has better stiffness, is easier to control during wrapping, and the fit between tapes is better.

The burst pressure of the thermoplastic reinforced pipe is tested using the process mentioned above, and the result is that it is 28 MPa.

## Example 3

Kevlar® 3000 denier fiber (purchased from DuPont of the United States) is twisted in the Z direction at 80 twists per meter, and the twist factor is 1.5. Then three strands of the said twisted fiber are stranded again and twisted in the S direction at 50 twists per meter, and the twist factor in the S direction is 1.65. The properly twisted cord is marked as Kevlar® 3000x1x3. Then the tape is woven with the said cord on a weaving machine, and the tape is 125 mm in width, warp-wise there are 85 Kevlar® 3000x1x3 twisted cords, while weft-wise there is 600 denier polyester fiber 7 filaments/10 mm in density. The schematic diagram of the unidirectional tape made is as shown in Figure 5.

The unidirectional reinforcing tape obtained goes between two heater plates at 130°C or so to set the weft-wise polyethylene fiber, and the unidirectional reinforcing tape set is coiled to become a plate to be used.

The high density polyethylene inner tube (the inner tube diameter is 101 mm, and the inner tube wall thickness is 5 mm) is extruded at 150°C on an inner tube extruder (a single screw plastic pipe extruder purchased from Crown Mechanical Company of Germany). After cooling, the properly woven unidirectional tape is wrapped onto the said inner tube as shown in Figure 6. The first layer is wrapped clockwise, and the included angle between the tape and the direction of the length of the tube is 54.7 degrees. The second layer is wrapped in the reverse direction, and the included angle is still 54.7 degrees. The properly wrapped tube is then coated at 150°C onto the high density polyethylene outer layer tube (the outer tube wall thickness is 4 mm) through the outer tube extruder (a single screw plastic pipe extruder purchased from Crown Mechanical Company of Germany). A schematic diagram of the profile of the thermoplastic reinforced pipe obtained is as shown in Figure 7. According to Figure 7, the warp-wise cords 2 in the reinforcing tape made of the Kevlar® 3000x1x3 warp-wise cords are closely packed in between the polyethylene inner tube 3 and the polyethylene outer tube 1.

The burst pressure of the thermoplastic reinforced pipe is tested using the process mentioned above, and the result is that it is 28 MPa.

## Example 4

Kevlar® 1000 denier fiber (purchased from Du Pont of the United States) is twisted in the Z direction at 80 twists per meter, and the twist factor is 1. Then three strands of the said twisted fiber are stranded again and twisted in the S direction at 50 twists per meter, and the twist factor in the S direction is 1. The properly twisted cord is marked as Kevlar® 1000x1x9. Then the tape is woven with the said cord on a weaving machine, and the tape is 125 mm in width, warp-wise there are 85 Kevlar® 1000x1x9 twisted cords, while weft-wise there is 600 denier polyester fiber 7 filaments/10 mm in density. The schematic diagram of the unidirectional tape made is as shown in Figure 5.

The unidirectional reinforcing tape obtained goes between two heater plates at 130°C or so to set the weft-wise polyethylene fiber, and the unidirectional reinforcing tape set is coiled to become a plate to be used.

The high density polyethylene inner tube (the inner tube diameter is 101 mm, and the inner tube wall thickness is 5 mm) is extruded at 150°C on an inner tube extruder (a single screw plastic pipe extruder purchased from Crown Mechanical Company of Germany). After cooling, the properly woven unidirectional tape is wrapped onto the said inner tube as shown in Figure 6. The first layer is wrapped clockwise, and the included angle between the tape and the direction of the length of the tube is 54.7 degrees. The second layer is wrapped in the reverse direction, and the included angle is still 54.7 degrees. The properly wrapped tube is then coated at 150°C onto the high density polyethylene outer layer tube (the outer tube wall thickness is 4 mm) through the outer tube extruder (a single screw plastic pipe extruder purchased from Crown Mechanical Company of Germany). A schematic diagram of the profile of the thermoplastic reinforced pipe obtained is as shown in Figure 7. According to Figure 7, the warp-wise cords 2 in the reinforcing tape made of the Kevlar® 1000x1x9 warp-wise cords are closely packed in between the polyethylene inner tube 3 and the polyethylene outer tube 1.

The burst pressure of the thermoplastic reinforced pipe is tested using the process mentioned above, and the result is that it is 28 MPa.

According to the comparative examples and examples mentioned above, even though the process of resin co-extrusion and composition brings about a very hard tape body, it is very easy to operate. However, because resin occupies a great deal of space the percentage that reinforcing fiber makes up is limited, so the burst strength of the reinforced thermoplastic pipe cannot be very high. While reinforcing using a traditional unidirectional tape may attain a relatively high area covered by the fiber, and the burst strength is also higher than the fiber resin composite tape, it is not easy to operate, and will often cause gaps between tapes. The thermoplastic pipe reinforced with the unidirectional tape of the thermo set fiber has a high fiber coverage, is good in wrapping operability, and is of high burst strength.

**Claims**

1.  A reinforced thermoplastic pipe, comprising a thermoplastic polymer inner tube, a thermoplastic polymer outer tube and a reinforcing fabric between the thermoplastic polymer inner tube and the thermoplastic polymer outer tube, the reinforcing fabric comprising thermoset thermoplastic polymer weft yarns and warp yarns, **characterized in that** in the melting point of the polymer used as the weft yarns is at least 10°C lower than that of the material used as the warp yarns.

2.  The reinforced thermoplastic pipe of Claim 1, wherein the thermoplastic polymer inner tube and outer tube described are made of the same or different materials, each of which is selected from thermoplastic polyolefin, polyvinylchloride, polyvinylidene fluoride and polyamide.

3.  The reinforced thermoplastic pipe of Claim 1, wherein each of the the warp yarns comprise a plurality of fibers selected from the group consisting of aramid fibers, polyester fibers, carbon fibers, glass fibers, metal fibers and mixtures thereof.

4.  The reinforced thermoplastic pipe of Claim 1, wherein the warp yarns are twisted into twisted cords.

5.  The reinforced thermoplastic pipe of Claim 1, wherein each of the warp yarns has a linear density of 500 to 9,000 denier, i.e. 550 to 9,900 dtex.

6.  The reinforced thermoplastic pipe of Claim 1, wherein each of the weft yarns comprise a plurality of thermoplastic fibers selected from the group consisting of thermoplastic polyamide fibers, polyester fibers. polyolefin fibers and mixtures thereof.

7.  The reinforced thermoplastic pipe of Claim 1, wherein each of the weft yarns has a linear density of 200 to 800 denier, i.e. 220 to 880 dtex.

8.  The reinforced thermoplastic pipe of Claim 1, wherein the density of the weft yarns after weaving is 2 to 10 groups of yarns/10mm.

9.  A process for making the reinforced thermoplastic pipe of Claim 1, comprising:

    a) providing the thermoplastic polymer inner tube;
    b) twisting the warp yarns until their twist factor is 0.1 to 6.5, to obtain twisted warp yarns; and then twisting groups or plies of 2-20 of the twisted warp yarns backward until the twist factor is 0.1 to 6.5, to obtain twisted cords;
    c) weaving on a loom the twisted cords and the thermosettable thermoplastic polymer weft yarns to obtain the reinforcing fabric, and then thermally setting the weft yarns to obtain a thermoset reinforcing fabric,
    d) wrapping the thermoset reinforcing fabric onto the inner tube at an Included angle of 50-60°, and
    e) coating the polymer outer tube onto the thermoset reinforcing fabric through an outer tube extruder,

    **characterized in that** the melting point of the polymer used as the weft yarns is at least 10°C lower than that of the material used as the warp yarns.

EP 2 344 798 B1

**10.** The process of Claim 9, wherein the thermoplastic polymer inner tube and outer tube are formed by the same or different materials, each of which is selected from the group consisting of thermoplastic polyolefin, polyvinylchloride, polyvinylidene fluoride and polyamide.

**11.** The process of Claim 9, wherein each of the warp yarns comprises a plurality of fibers selected from the group consisting of aramid fibers, polyester fibers, carbon fibers, glass fibers, metal fibers and mixtures thereof.

**12.** The process of Claim 9, wherein each of the warp yarns has a linear density of 500 to 9,000 denier, i.e. 550 to 9,900 dtex.

**13.** The process of Claim 9, wherein each of the weft yarns comprise a plurality of thermoplastic fibers selected from the group consisting of thermoplastic polyamide fibers, polyester fibers, polyolefin fibers and mixtures thereof.

**14.** The process of Claim 9, wherein each of the weft yarns has a linear density of 200 to 800 denier, i.e. 220 to 880 dtex.

**15.** The process of Claim 9, wherein the density of the weft yarns after weaving is 2 to 10 groups of yarns/10mm.

**Patentansprüche**

**1.** Verstärktes thermoplastisches Rohr umfassend ein thermoplastisches Polymerinnenrohr, ein thermoplastisches Polymeraußenrohr und einen verstärkenden Textilstoff zwischen dem thermoplastischen Polymerinnenrohr und dem thermoplastischen Polymeraußenrohr, wobei der verstärkende Textilstoff Schussgarne und Kettgarne aus thermohärtendem Thermoplastpolymer umfasst, **dadurch gekennzeichnet, dass** der Schmelzpunkt des als Schussgarne verwendeten Polymers mindestens 10 °C niedriger liegt als derjenige des Materials, das als Kettgarne verwendet wird.

**2.** Verstärktes thermoplastisches Rohr nach Anspruch 1, wobei das beschriebene thermoplastische Polymerinnenrohr und -außenrohr aus denselben oder verschiedenen Materialien hergestellt sind, von denen jedes unter thermoplastischem Polyolefin, Polyvinylchlorid, Polyvinylidenfluorid und Polyamid ausgewählt ist.

**3.** Verstärktes thermoplastisches Rohr nach Anspruch 1, wobei jedes der Kettgarne eine Vielzahl von Fasern umfasst ausgewählt aus der Gruppe bestehend aus Aramidfasern, Polyesterfasern, Kohlefasern, Glasfasern, Metallfasern und Mischungen davon.

**4.** Verstärktes thermoplastisches Rohr nach Anspruch 1, wobei die Kettgarne zu gezwirnten Schnüren gezwirnt werden.

**5.** Verstärktes thermoplastisches Rohr nach Anspruch 1, wobei jedes der Kettgarne eine lineare Dichte von 500 bis 9.000 Denier, d.h. 550 bis 9.900 dtex, aufweist.

**6.** Verstärktes thermoplastisches Rohr nach Anspruch 1, wobei jedes der Schussgarne eine Vielzahl von thermoplastischen Fasern umfasst ausgewählt aus der Gruppe bestehend aus thermoplastischen Polyamidfasern, Polyesterfasern, Polyolefinfasern und Mischungen davon.

**7.** Verstärktes thermoplastisches Rohr nach Anspruch 1, wobei jedes der Schussgarne eine lineare Dichte von 200 bis 800 Denier, d.h. 220 bis 880 dtex, aufweist.

**8.** Verstärktes thermoplastisches Rohr nach Anspruch 1, wobei die Dichte der Schussgarne nach dem Weben 2 bis 10 Garngruppen/10 mm beträgt.

**9.** Verfahren zur Herstellung des verstärkten thermoplastischen Rohrs nach Anspruch 1, umfassend:

a) das Bereitstellen des thermoplastischen Polymerinnenrohrs;
b) das Verzwirnen der Kettgarne, bis ihre Zwirneffizienz 0,1 bis 6,5 beträgt, um gezwirnte Kettgarne zu erhalten; und dann das Verzwirnen von Gruppen oder Strähnen von 2 - 20 der gezwirnten Kettgarne rückwärts, bis die Zwirneffizienz 0,1 bis 6,5 beträgt, um gezwirnte Schnüre zu erhalten;
c) das Weben, an einem Webstuhl, der gezwirnten Schnüre und der thermohärtbaren thermoplastischen Polymerschussgarne, um den verstärkenden Textilstoff zu erhalten, und dann das Thermohärten der Schussgarne,

9

um einen thermogehärteten verstärkenden Textilstoff zu erhalten,

d) das Aufwickeln des thermogehärteten verstärkenden Textilstoffs auf ein Innenrohr in einem einschließlichen Winkel von 50 - 60° und

e) das schichtförmige Aufbringen des Polymeraußenrohrs auf den thermogehärteten verstärkenden Textilstoff durch einen Außenrohrextruder,

**dadurch gekennzeichnet, dass** der Schmelzpunkt des als Schussgarne verwendeten Polymers mindestens 10 °C niedriger liegt als derjenige des Material, das als Kettgarne verwendet wird.

10. Verfahren nach Anspruch 9, wobei das thermoplastische Polymerinnenrohr und-außenrohr aus denselben oder verschiedenen Materialien hergestellt sind, von denen jedes aus der Gruppe ausgewählt ist bestehend aus thermoplastischem Polyolefin, Polyvinylchlorid, Polyvinylidenfluorid und Polyamid.

11. Verfahren nach Anspruch 9, wobei jedes der Kettgarne eine Vielzahl von Fasern umfasst ausgewählt aus der Gruppe bestehend aus Aramidfasern, Polyesterfasern, Kohlefasern, Glasfasern, Metallfasern und Mischungen davon.

12. Verfahren nach Anspruch 9, wobei jedes der Kettgarne eine lineare Dichte von 500 bis 9.000 Denier, d.h. 550 bis 9.900 dtex, aufweist.

13. Verfahren nach Anspruch 9, wobei jedes der Schussgarne eine Vielzahl von thermoplastischen Fasern umfasst ausgewählt aus der Gruppe bestehend aus thermoplastischem Polyamidfasern, Polyesterfasern, Polyolefinfasern und Mischungen davon.

14. Verfahren nach Anspruch 9, wobei jeder der Schussgarne eine lineare Dichte von 200 bis 800 Denier, d.h. 220 bis 880 dtex, aufweist.

15. Verfahren nach Anspruch 9, wobei die Dichte der Schussgarne nach dem Weben 2 bis 10 Garngruppen/10 mm beträgt.

**Revendications**

1. Tuyau thermoplastique renforcé, comprenant un tube interne en polymère thermoplastique, un tube externe en polymère thermoplastique et un textile de renfort entre le tube interne en polymère thermoplastique et le tube externe en polymère thermoplastique,
le textile de renfort comprenant des fils de trame et des fils de chaîne en polymère thermoplastique thermodurcissable, **caractérisés en ce que** le point de fusion du polymère utilisé pour servir de fils de trame est au moins 10°C inférieur à celui du matériau utilisé pour servir de fils de chaîne.

2. Tuyau thermoplastique renforcé selon la revendication 1, dans lequel le tube interne et le tube externe en polymère thermoplastique décrits sont fabriqués à partir de matériaux identiques ou différents, chacun d'eux étant sélectionné parmi une polyoléfine thermoplastique, le poly(chlorure de vinyle), le poly(fluorure de vinylidène) et le polyamide.

3. Tuyau thermoplastique renforcé selon la revendication 1, dans lequel chacun des fils de chaîne comprend une pluralité de fibres sélectionnées parmi le groupe constitué des fibres d'aramide, des fibres de polyester, des fibres de carbone, des fibres de verre, des fibres métalliques et de leurs mélanges.

4. Tuyau thermoplastique renforcé selon la revendication 1, dans lequel les fils de chaîne sont torsadés en cordes torsadées.

5. Tuyau thermoplastique renforcé selon la revendication 1, dans lequel chacun des fils de chaîne a une densité linéaire de 500 à 9 000 deniers c'est-à-dire 550 à 9 900 dtex.

6. Tuyau thermoplastique renforcé selon la revendication 1, dans lequel chacun des fils de trame comprend une pluralité de fibres thermoplastiques sélectionnées parmi le groupe constitué des fibres de polyamide thermoplastique, des fibres de polyester, des fibres de polyoléfine et de leurs mélanges.

7. Tuyau thermoplastique renforcé selon la revendication 1, dans lequel chacun des fils de trame a une densité linéaire de 200 à 800 deniers, c'est-à-dire 220 à 880 dtex.

**8.** Tuyau thermoplastique renforcé selon la revendication 1, dans lequel la densité des fils de trame après tissage est 2 à 10 groupes de fils/10 mm.

**9.** Procédé de fabrication du tuyau thermoplastique renforcé selon la revendication 1, comprenant:

a) la fourniture du tuyau interne en polymère thermoplastique;
b) la torsion des fils de chaîne jusqu'à ce que leur coefficient de torsion soit de 0,1 à 6,5, pour obtenir des fils de chaîne torsadés; et ensuite la torsion de groupes ou de plis de 2-20 des fils de chaîne torsadés vers l'arrière jusqu'à ce que le coefficient de torsion soit de 0,1 à 6,5, pour obtenir des cordes torsadées;
c) le tissage sur un métier des cordes torsadées et des fils de trame en polymère thermoplastique thermodurcissable pour obtenir le textile de renfort, et ensuite la fixation thermique des fils de trame pour obtenir un textile de renfort thermodurci,
d) l'enveloppement du textile de renfort thermodurci sur le tube interne sous un angle inclus de 50 à 60°, et
e) le revêtement du tube externe polymère sur le textile de renfort thermodurci à travers une extrudeuse de tube externe,

**caractérisé en ce que** le point de fusion du polymère utilisé pour servir de fils de trame est au moins 10°C inférieur à celui du matériau utilisé pour servir de fils de chaîne.

**10.** Procédé selon la revendication 9, dans lequel le tube interne et le tube externe en polymère thermoplastique sont formés de matériaux identiques ou différents, chacun d'eux étant sélectionné parmi le groupe constitué d'une polyoléfine thermoplastique, du poly(chlorure de vinyle), du poly(fluorure de vinylidène) et du polyamide.

**11.** Procédé selon la revendication 9, dans lequel chacun des fils de chaîne comprend une pluralité de fibres sélectionnées parmi le groupe constitué des fibres d'aramide, des fibres de polyester, des fibres de carbone, des fibres de verre, des fibres métalliques et de leurs mélanges.

**12.** Procédé selon la revendication 9, dans lequel chacun des fils de chaîne a une densité linéaire de 500 à 9 000 deniers, c'est-à-dire 550 à 9 900 dtex.

**13.** Procédé selon la revendication 9, dans lequel chacun des fils de trame comprend une pluralité de fibres thermoplastiques sélectionnées parmi le groupe constitué des fibres de polyamide thermoplastique, des fibres de polyester, des fibres de polyoléfine et de leurs mélanges.

**14.** Procédé selon la revendication 9, dans lequel chacun des fils de trame a une densité linéaire de 200 à 800 deniers, c'est-à-dire 220 à 880 dtex.

**15.** Procédé selon la revendication 9, dans lequel la densité des fils de trame après tissage est de 2 à 10 groupes de fils/10 mm.

FIG. 1

FIG. 2

FIG. 3

FIG. 4

FIG. 5

FIG. 6A

FIG. 6B

FIG. 7

**EP 2 344 798 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6179008 B1
- US 20080006338 A
- US 20030181111 A